(19) Europäisches Patentamt
European Patent Office
Office européen des brevets

(11) Publication number: 0 122 600
A1

(12) # EUROPEAN PATENT APPLICATION

(21) Application number: 84104104.9

(22) Date of filing: 12.04.84

(51) Int. Cl.³: C 09 B 62/513
D 06 P 3/66, C 09 B 67/26

(30) Priority: 18.04.83 US 485691

(43) Date of publication of application:
24.10.84 Bulletin 84/43

(84) Designated Contracting States:
CH DE FR GB IT LI

(71) Applicant: AMERICAN HOECHST CORPORATION
Route 202-206 North
Somerville, N.J. 08876(US)

(72) Inventor: Corso, Anthony J.
5 Crocus Court
Coventry Rhode Island 02816(US)

(72) Inventor: Roe, Kathleen M.
528 Commonwealth Avenue
Warwick Rhode Island 02388(US)

(74) Representative: Becker, Heinrich Karl Engelbert, Dr. et al,
HOECHST AKTIENGESELLSCHAFT Central Patent Department P.O. Box 80 03 20
D-6230 Frankfurt am Main 80(DE)

(54) **Fiber-reactive navy disazo dyestuffs.**

(57) Water-soluble fiber-reactive yellow dyestuffs of the formula

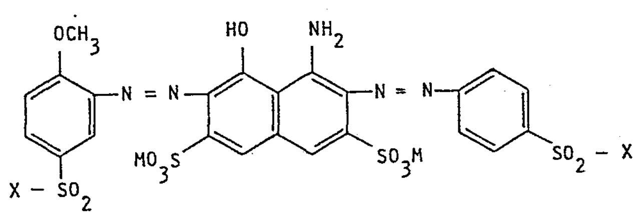

wherein M is hydrogen or an alkali metal, such as sodium, potassium or lithium, or the equivalent of an alkaline earth metal, such as of calcium, and X is the vinyl group or a group of the formula

$$-CH_2-CH_2-Z \qquad (2)$$

in which Z is hydroxy, chlorine, bromine, sulfato, thiosulfato, phosphato, acetyloxy, propionyloxy or di-(lower alkyl)-amino, but both x not being simultaneously a beta-sulfatoethyl group. Process for their preparation and liquid compositions of said dyestuffs.

EP 0 122 600 A1

Croydon Printing Company Ltd

FIBER-REACTIVE NAVY DISAZO DYESTUFFS

The present invention provides water-soluble, fiber-reactive monoazo dyestuffs, and liquid compositions thereof.

In GB-PS 1,200,096, there is disclosed, in Example 8, a reactive dyestuff of the formula

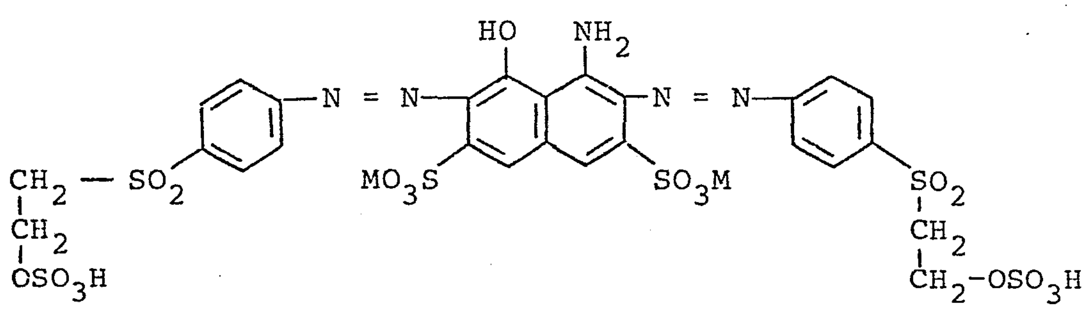

which is said to provide black dyeings having good fastness properties. Similar dyestuffs are known from German Offenlegungsschrift Nos. 3,113,989 and 3,113,885, which are methoxy- and/or methyl-substituted in one of the diazo components.

Applicants have now found new, water-soluble fiber-reactive dyestuffs of the general formula (1)

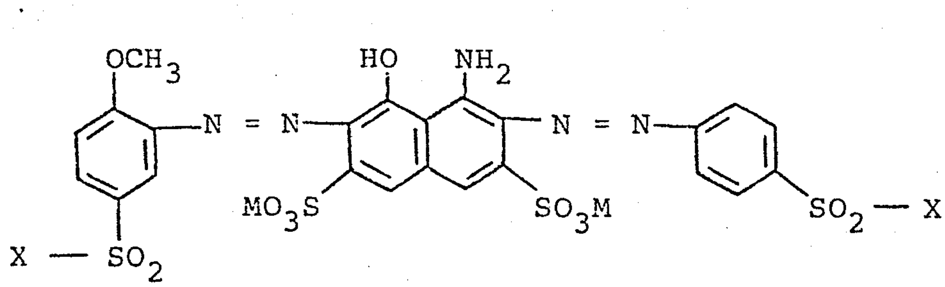

(1)

wherein M is hydrogen or an alkali metal, such as sodium, potassium or lithium, or the equivalent of an alkaline earth metal, such as of calcium, and both X, being different

from each other or preferably identical to each other, represent the vinyl group or a group of the general formula (2)

$$—CH_2 - CH_2 - Z \qquad (2)$$

in which Z is hydroxy, chlorine, bromine, sulfato (of the formula $-OSO_3M$ with M being defined as above), thiosulfato (of the formula $-S-SO_3M$ with M being defined as above), phosphato (of the formula $-OPO_3M_2$ with M being defined as above), acetyloxy, propionyloxy or di-(lower alkyl)-amino, but with the proviso that both X are not ß-sulfatoethyl simultaneously.

Liquid compositions containing 5 to 45 % of said dyestuff in water are also provided.

The term "lower" means that the group indicated so, contains 1 to 4 C-atoms.

The dyestuff of the present invention can be prepared according to a process of the invention by coupling the 1-amino-8-hydroxy-naphthalene-3,6-disulfonic acid, or a salt thereof, preferably an alkali metal salt thereof, first with a diazotized amino compound of the formula (3)

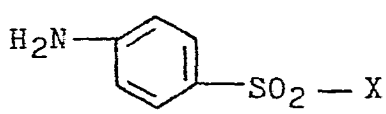

(3)

in which X is defined as above, and then with a diazotized amino compound of the general formula (4)

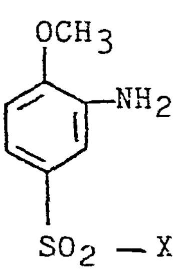

(4)

in which X is defined as above, while employing the conventional coupling conditions for preparing disazo dyestuffs of the 1-amino-8-hydroxy-3,6-disulfo-naphthalene coupling component. Both diazo components can be added to the coupling component separately, the second diazo component being added after the formation of the monoazo compound had been finished, or, advantageously, simultaneously to conduct the coupling reactions in a "one-pot"-process according to German Offenlegungsschrift No. 3,113,885, which is incorporated herein by reference. The first coupling step is carried out at a pH-value of 0 to 3.5, the second at a pH-value of 4 to 7. The coupling reactions can be conducted at a temperature of -5°C to +25°C.

After preparation, the dyestuff may be isolated as a powder, either by salting it out of solution or by spray-drying, and brought to standard strength by the addition of inorganic salt, generally sodium sulfate. Advantageously, the prepared dyestuff may be used directly as a liquid composition after standardizing with water. Such liquid compositions will contain from 5 to 45 % (by weight) of the water-soluble dyestuff of the present invention, preferably 10 to 20 %, and water. Said liquid composition may also optionally contain from 0 to 10 %, preferably 0 to 6 %, of inert inorganic salt, typically the alkali metal (lithium, sodium, potassium) and ammonium chlorides and sulfates and mixtures thereof. While said liquid composition may also optionally contain up to 5 % of buffer substances, it is preferred that the composition remain substantially free of a buffer. It is also preferred that liquid compositions of the dyestuff having the ß-sulfatoethylsulfonyl group be maintained at a pH of from about 2.5 to about 4.5 for maximum stability.

The dyestuff of the present invention is suitable for the dyeing of cellulosic materials such as cotton, linen, viscose rayon or staple fibers. It can be applied by any one of the usual dyeing and printing methods for reactive dyestuffs and yields on cellulosic materials, in the presence of alkaline agents, brilliant navy shades having excellent fastness and levelling properties, and particularly superior color yield and build up (ratio of dyestuff concentration to color intensity) as well as chlorine resistance and resistance to alkaline hydrolysis. The present dyestuffs may also be used on wool, silk or polyamide fibers.

The invention may be further ilustrated by the following Examples in which the parts and percentages are by weight.

EXAMPLE 1

17.3 Parts of 1-aminobenzene-4-vinylsulfone were diazotized at 0 to 5°C in 150 parts by volume of water and 30 parts of an aqueous 31 % hydrochloric acid with 18 parts of an aqueous 40 % sodium nitrite solution. Subsequently, 32.4 parts of 1-amino-8-hydroxynaphthalene-3,6-disulfonic acid-monosodium salt were added to the diazo suspension and coupled at a pH-value of 1 to 2. After completion of the reaction, the pH was adjusted to 6.0 by adding an aqueous 15 % sodium carbonate solution.

31.2 parts of 2-amino-1-methoxybenzene-4-ß-sulfatoethyl-sulfone were diazotized at 0 to 5°C in 150 parts of water and 20 parts by weight of an aqueous 31 % hydrochloric acid with 18 parts by weight of an aqueous 40 % sodium nitrite solution. This diazo component was then slowly added to the previously prepared monoazo dyestuff while maintaining the coupling reaction at a pH-value of 6.0 to 6.5 by addition of sodium carbonate.

The resulting solution was spray-dried to yield a dyestuff powder containing beside inorganic sulfate salts and inorganic chloride salts (electrolytes) the alkali metal salt of the formula

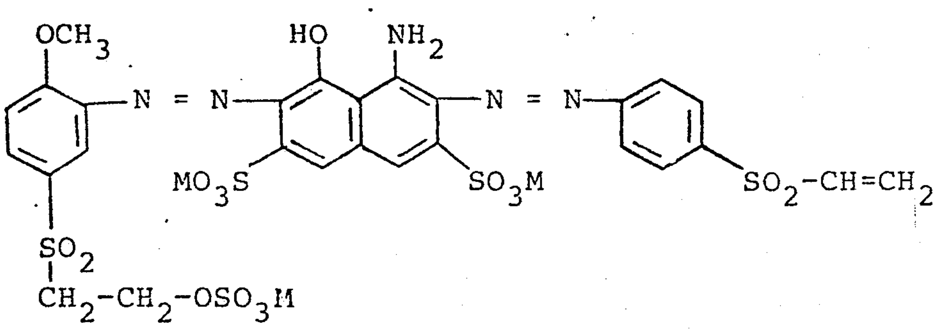

which is well suitable as dyestuff as described above.

Alternatively, the dyestuff solution before spray-drying can be converted to a liquid dyestuff solution by the addition of water and adjusting the pH to 2.5 to 4.5.

EXAMPLE 2

17.3 Parts of 1-aminobenzene-4-vinylsulfone were diazotized at 0 to 5°C in 150 parts by volume of water and 30 parts of an aqueous 31 % hydrochloric acid with 18 parts of an aqueous 40 % sodium nitrite solution. Subsequently, 32.4 parts of 1-amino-8-hydroxynaphthalene-3,6-disulfonic acid-monosodium salt were added to the diazo suspension and coupled at a pH-value of 1 to 2. After completion of the reaction, the pH was adjusted to 6.0 by adding an aqueous 15 % sodium carbonate solution.

21.3 Parts of 2-amino-1-methoxy-benzene-4-vinylsulfone were diazotized at 0 to 5°C in 150 parts of water and 30 parts of an aqueous 31 % hydrochloric acid by means of 18 parts of an aqueous 40 % sodium nitrite solution in the conventional manner. This diazo component was then slowly added to the previously prepared monoazo dyestuff while maintaining the coupling reaction at a pH-value of 6.0 to 6.5 by addition of sodium carbonate.

The resulting solution was spray-dried to yield a dyestuff powder containing beside inorganic sulfate salts and inorganic chloride salts (electrolytes) the alkali metal salt of the formula

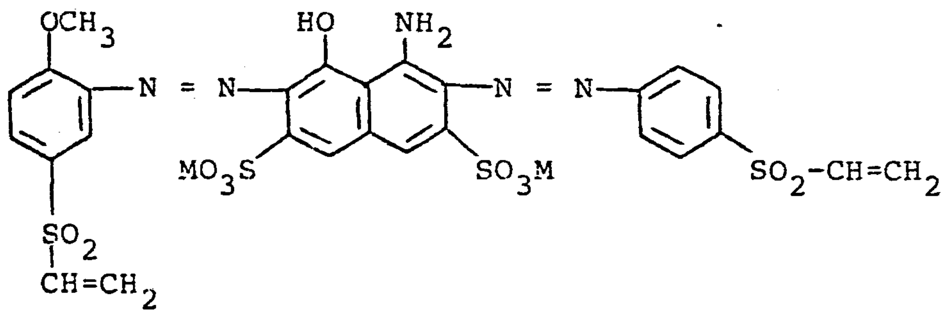

which is well suitable as dyestuff as described above.

Examples 3 to 6

Further disazo dyestuffs according to the invention can be prepared according to the processes of the invention, for example analogously to Examples 1 or 2, by replacing one or both of the diazo components of the dyestuffs of Examples 1 or 2 by another or two other diazo componente of the general formula (3) or (4) or both. Such dyestuffs according to the invention are, for example, described in the following Table; they are marked in form of their free acids and are preferably in form of the alkali metal salts, such as sodium, potassium or lithium salts. They have also good fibre reactive dyestuff properties, and they yield, by application and fixation methods conventional in the dyeing and printing technique for fibre reactive dyestuffs, on the materials mentioned in the description part, brilliant navy dyeings and prints having good fastness properties, as mentioned in the description part.

Ex. Dyestuff according to the invention

3

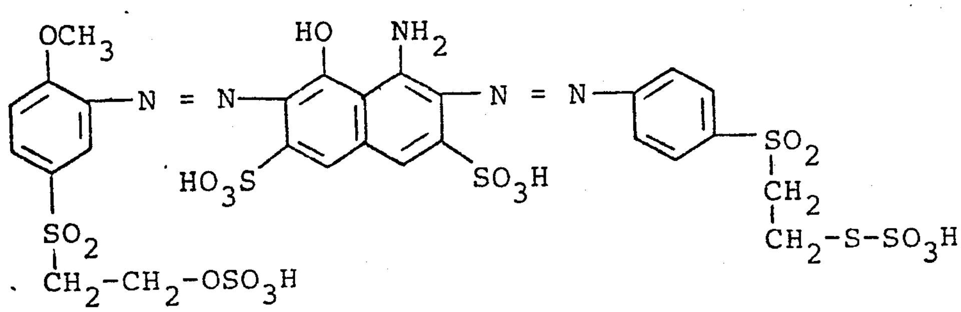

4

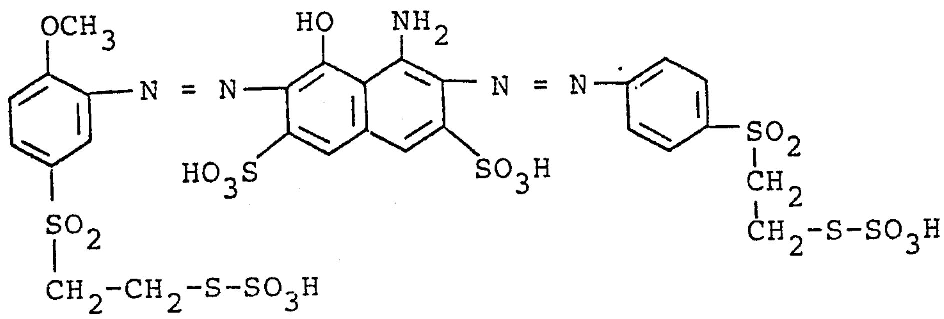

5

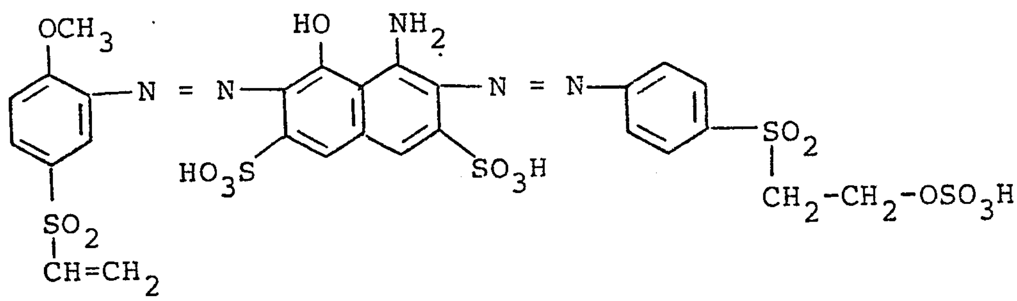

6

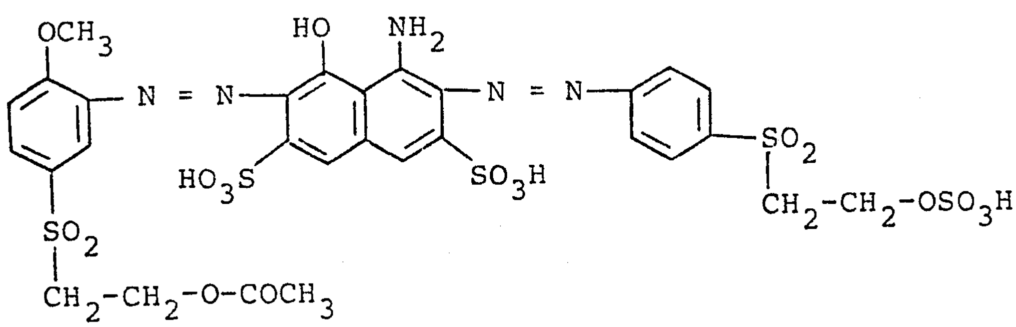

Patent Claims:

1. A water-soluble fiber-reactive dyestuff of the general formula (1)

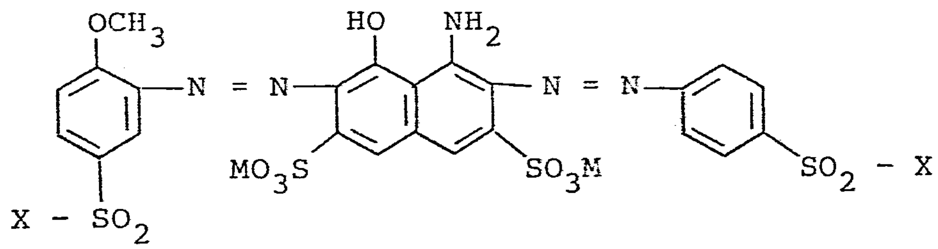

wherein M is hydrogen or an alkali metal, or the equivalent of an alkaline earth metal, and both X, being different from or identical to each other, each represent the vinyl group or a group of the general formula (2)

$$- CH_2 - CH_2 - Z \qquad (2)$$

in which Z is hydroxy, chlorine, bromine, sulfato, thiosulfato, phosphato, acetyloxy, propionyloxy or di-(lower alkyl)-amino, but both X being not simultaneously a ß-sulfatoethyl group.

2. A dyestuff according to claim 1 of the formula (1) in which M is defined as in claim 1 and X is each a vinyl group.

3. A dyestuff according to claim 1, in which one X is a ß-sulfatoethyl group.

4. A dyestuff according to claim 1 of the formula (1) in which M is defined as in claim 1 and one X is a vinyl group and the other X is a ß-sulfatoethyl group.

5. A process for the preparation of a dyestuff of the general formula (1) mentioned and defined in claim 1, which comprises coupling 1-amino-8-hydroxy-naphthalene-3,6-disulfonic acid, or a salt thereof, both with a diazo-13. A process for coloring a material made of cellulose, wool, silk and/or polyamide fibers, which comprises bringing in contact an aqueous solution of the dyestuff of formula (1) of claim 1, with said material and subjecting the material treated thus to the action of heat and/or of an agent having an alkaline reaction.

tized amino compound of the general formula (3) and a diazotized amino compound of the general formula (4)

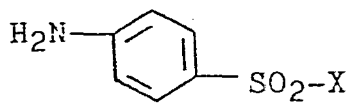

(3)

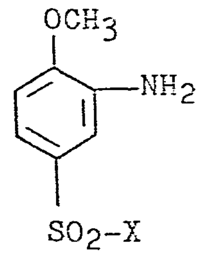

(4)

in which both X are defined as in claim 1 but not being simultaneously β-sulfatoethyl.

6. A liquid dyestuff composition comprising 5 to 45 % of a water-soluble dyestuff according to claim 1, and water.

7. A liquid dyestuff composition comprising 5 to 45 % of a water-soluble dyestuff according to claim 3 or 4, and water.

8. A liquid dyestuff composition according to claim 6 or 7, which additionally comprises from 0 to 6 % inert inorganic salt.

9. A liquid dyestuff composition according to claim 6, 7 or 8, wherein said inert inorganic salt is selected from the allkali metal and ammonium chlorides and sulfates and mixtures thereof.

10. A liquid dyestuff composition according to claim 6, 7, 8 or 9, which comprises from 10 to 20 % of said water-soluble dyestuff.

11. A liquid dyestuff composition according to claim 6, 7, 8, 9 or 10, which is maintained at a pH of from about 2.5 to about 4.5.

12. Use of a dyestuff of claim 1 for coloring a material made of cellulose, wool, silk and/or polyamide fibers.

European Patent Office

0122600

Application number

# EUROPEAN SEARCH REPORT

EP 84 10 4104

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 657 205 (HEYNA et al.)<br>* Column 9, lines 70-75; column 4, lines 1-21 *<br>--- | 1,2,5, 12,13 | C 09 B 62/513<br>D 06 P 3/66<br>C 09 B 67/26 |
| X | FR-A-1 558 340 (MITSUBISHI)<br>* Page 5, left-hand column, 2nd formula; page 2, left-hand column, lines 16-17 *<br>----- | 1,2,5, 12,13 | |
| | | | TECHNICAL FIELDS SEARCHED (Int. Cl. 3) |
| | | | C 09 B |

The present search report has been drawn up for all claims

| Place of search | Date of completion of the search | Examiner |
|---|---|---|
| THE HAGUE | 05-06-1984 | GINESTET M.E.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document